# EUROPEAN PATENT APPLICATION

(11) **EP 2 623 861 A1**
(43) Date of publication of application: **07.08.2013**
(21) Application number: 11828475.1
(22) Date of filing: 30.09.2011
(51) Int. Cl.: F23C 99/00, F23C 9/08, F23D 1/00, F23L 7/00

(54) **COMBUSTION SYSTEM AND METHOD FOR OPERATING SAME**

(30) Priority: 28.02.2011 WO PCT/JP2011/001162; 30.09.2010 JP 2010222052
(71) Applicant: Babcock-Hitachi Kabushiki Kaisha, Chiyoda-ku Tokyo 101-0021 (JP)
(72) Inventor: MINE, Toshihiko, Kure-shi Hiroshima 737-0029 (JP); KIYAMA, Kenji, Kure-shi Hiroshima 737-0029 (JP); KURAMASHI, Koji, Kure-shi Hiroshima 737-8508 (JP); OCHI, Kenichi, Kure-shi Hiroshima 737-8508 (JP); OKAZAKI, Hirofumi, Hitachi-shi Ibaraki 319-1221 (JP)
(74) Representative: Lock, Graham James
(86) International application number: PCT/JP2011/005559
(87) International publication number: WO 2012/042910

(57) **Abstract**

A combustion system includes a burner 19 adapted to burn pulverized coal with combustion gas made of a mixture of oxygen-rich gas and flue gas produced by combustion of the pulverized coal. The burner 19 in turn includes a fuel nozzle 25 adapted to burn the pulverized coal supplied in accompaniment with carrier gas, a combustion gas nozzle 27 adapted to supply additional combustion gas 26 into the fuel nozzle 25, and a combustion gas nozzle 29 placed on an outer side of the fuel nozzle 25 and adapted to supply combustion gases 28 and 30. The fuel nozzle 25 is supplied with the carrier gas produced by adding oxygen-rich gas to the flue gas while the combustion gas nozzle 27 and combustion gas nozzle 29 are supplied with combustion gas produced by adding oxygen-rich gas to the flue gas. Respective supplied amounts and oxygen concentrations of the carrier gas, additional combustion gas 26, and combustion gases 28 and 30 are each configured to be adjustable.

## Description

### Technical Field

The present invention relates to a combustion system, and more particularly, to a technique for stable combustion in a boiler of a combustion apparatus.

### Background Art

To reduce global warming and other environmental burden, there is a social demand for reduction of carbon dioxide (CO₂) emissions. CO₂ is produced when solid fuels, such as coal, containing carbon are burned. Therefore, there is demand to reduce CO₂ emissions produced when solid fuels are burned.

Thus, Patent Literature 1 proposes to burn fuel using combustion gas made of a mixture of oxygen-rich gas and flue gas, thereby increase CO₂ concentration in combustion flue gas, and thereby recover CO₂ form the combustion flue gas with high efficiency. Specifically, Patent Literature 1 proposes a boiler plant based on a so-called oxygen-based combustion method which separates air into gas mainly composed of oxygen and gas mainly composed of nitrogen, produces combustion gas by diluting the gas mainly composed of oxygen (hereinafter referred to as oxygen-rich gas) with combustion flue gas, and burns pulverized coal with the combustion gas. Incidentally, the technique described in Patent Literature 1 uses combustion flue gas with a low oxygen concentration as a carrier gas for gas-stream conveyance of the pulverized coal, and consequently has a problem of ignition delay depending on the type of coal.

To deal with this, Patent Literature 2 proposes a technique for speeding up the ignition of pulverized coal. According to the technique described in Patent Literature 2, in a combustion boiler plant that is, instead of an oxygen-based combustion method, adapted to burn pulverized coal by air, the pulverized coal is transported using a stream of a carrier gas whose oxygen concentration has been reduced by mixing combustion flue gas in air, because coal with a high volatile content might ignite spontaneously during transport when transported pneumatically. However, the reduction in the oxygen concentration in the carrier gas causes ignition delay of the pulverized coal in a combustion zone. Therefore, to accelerate the ignition of the pulverized coal, the oxygen concentration is increased by supplying additional air to the combustion zone in which the pulverized coal is burned.

### Citation List

### Patent Literature

Patent Literature 1: JP-A-2007-147162
Patent Literature 2: JP 4150968

### Summary of Invention

### Technical Problem

Incidentally, with the technique described in Patent Literature 2, to prevent natural ignition, the oxygen concentration in the carrier gas is set according to the type of pulverized coal. On the other hand, the air added to the combustion zone to improve ignition performance has a fixed oxygen concentration. Therefore, flow rate of the additional air is increased relative to flow rate of the carrier gas, thereby increasing the oxygen concentration in the combustion zone. Therefore, if the flow rate of the additional air is increased too much, it could not produce a stable reducing flame which is formed by limiting the amount of oxygen supplied to fuel in the combustion zone.

A problem to be solved by the present invention is to achieve stable combustion in a combustion system switchable to an oxygen-based combustion method.

### Solution to Problem

To solve the above problem, the present invention provides a combustion system wherein: a burner adapted to burn solid fuel comprises a fuel nozzle adapted to burn solid fuel supplied in accompaniment with carrier gas, a first combustion gas nozzle adapted to supply first combustion gas into the fuel nozzle, and a second combustion gas nozzle placed on an outer side of the fuel nozzle and adapted to supply second combustion gas; the combustion system is configured to be switchable between an air combustion mode in which air is used as the carrier gas, the first combustion gas and the second combustion gas, and an oxygen-based combustion mode in which mixed gas is used as the carrier gas, the first combustion gas and the second combustion gas, where the mixed gas is made by mixing oxygen-rich gas with flue gas produced when the solid fuel is burned; respective oxygen concentrations and supplied amounts of the carrier gas, the first combustion gas, and the second combustion gas are each configured to be adjustable; and in the oxygen-based combustion mode, the oxygen concentration in the carrier gas is adjusted to be lower than an average oxygen concentration of the carrier gas, the first combustion gas and the second combustion gas taken together; and the oxygen concentration in the first combustion gas is adjusted to be equal to or higher than the average oxygen concentration of the carrier gas, the first combustion gas and the second combustion gas taken together.

Consequently, even if the oxygen concentration in the carrier gas is set low to prevent spontaneous ignition of the solid fuel during transport, it is possible to improve ignition performance by controlling the oxygen concentration in the first combustion gas supplied into the fuel nozzle. Accordingly, an amount of oxygen in a first combustion zone in the fuel nozzle is set at a level necessary to maintain a reducing flame. Then, if a deficient amount of oxygen in a second combustion zone is determined based on amounts of oxygen in the carrier gas and first combustion gas in the first combustion zone and the oxygen deficiency is made up by controlling flow rate of the second combustion gas, the solid fuel can be burned stably.

In this case, the fuel nozzle may include a distributor adapted to divide a flow channel in the nozzle and an outlet of the first combustion gas nozzle may be formed at a location overlapping the distributor when viewed in a direction perpendicular to a burner axis. Consequently, since the flow channel is partitioned by the distributor, the solid fuel, carrier gas, and first combustion gas are kept from mixing with one another. This makes it possible to prevent dispersion of the solid fuel due to collisions among solid fuel particles as well as diffusion of the first combustion gas to near a central axis. As a result, gas with a low oxygen concentration and gas with a high oxygen concentration can be separated at a burner outlet with the former directed onto the central axis and the latter directed toward an outer circumference, improving ignition performance.

Also, the fuel nozzle includes a venturi and a concentrator located in a flow channel upstream of a position at which the first combustion gas nozzle is connected, the venturi being adapted to smoothly contract and expand a sectional area of the flow channel of the fuel nozzle from an outer peripheral side while the concentrator being adapted to smoothly expand the sectional area of the flow channel downstream of the venturi from inside; and a flame holder is installed at a tip of a partition wall partitioning the fuel nozzle and the second combustion gas nozzle, the flame holder being adapted to block flow of the solid fuel and carrier gas ejected through the fuel nozzle and flow of the first combustion gas ejected through the first combustion gas nozzle. This makes it possible to reduce pressure on the downstream side of the flame holder, causing high-temperature gas in the boiler to flow to the downstream side of the flame holder, and thereby improve the ignition performance of the solid fuel.

Also, the present invention provides a combustion system comprising: an oxygen-based combustion boiler adapted to burn solid fuel by diluting oxygen-rich gas with flue gas; a crusher adapted to crush the solid fuel; a fuel supply device adapted to supply the crushed solid fuel to a burner of the boiler in accompaniment with carrier gas; a dust collector adapted to collect fly ashes in flue gas discharged from the boiler; and a carbon dioxide recovery unit adapted to separate and recover carbon dioxide from the flue gas discharged from the dust collector; the burner in turn comprising a fuel nozzle adapted to burn the solid fuel supplied in accompaniment with the carrier gas, a first combustion gas nozzle adapted to supply first combustion gas into the fuel nozzle, and a second combustion gas nozzle placed on an outer side of the fuel nozzle and adapted to supply second combustion gas, wherein the combustion system further comprises a carrier gas line adapted to generate carrier gas from the flue gas branching off from a downstream side of the dust collector, a combustion gas line adapted to generate combustion gas by adding oxygen-rich gas to the flue gas branching off from the downstream side of the dust collector, and a controller adapted to set oxygen concentration in the carrier gas and control flow rate of the carrier gas according to a supplied amount and type of the solid fuel, control a supplied amount and oxygen concentration of the first combustion gas based on the oxygen concentration and flow rate of the carrier gas and a set amount of oxygen needed for combustion of the solid fuel, and control a supplied amount of the second combustion gas based on an amount of oxygen in the carrier gas, an amount of oxygen in the first combustion gas, and a second set amount of oxygen needed for combustion of the solid fuel.

In this case, an adding device adapted to add oxygen-rich gas to the flue gas based on the oxygen concentration in the carrier gas set by the controller may be installed on the carrier gas line.

On the other hand, the present invention provides an operating method for a combustion system which comprises an oxygen-based combustion boiler adapted to burn solid fuel by diluting oxygen-rich gas with flue gas, a crusher adapted to crush the solid fuel, a fuel supply device adapted to supply the crushed solid fuel to a burner of the boiler in accompaniment with carrier gas, a dust collector adapted to collect fly ashes in flue gas discharged from the boiler, and a carbon dioxide recovery unit adapted to separate and recover carbon dioxide from the flue gas discharged from the dust collector, the burner in turn comprising a fuel nozzle adapted to burn the solid fuel supplied in accompaniment with the carrier gas, a first combustion gas nozzle adapted to supply first combustion gas into the fuel nozzle, and a second combustion gas nozzle placed on an outer side of the fuel nozzle and adapted to supply second combustion gas, the operating method comprising: generating the carrier gas by selectively adding oxygen-rich gas to the flue gas branching off from the downstream side of the dust collector; generating the first combustion gas and the second combustion gas by adding oxygen-rich gas to the flue gas branching off from the downstream side of the dust collector; and setting oxygen concentration in the carrier gas and controlling flow rate of the carrier gas according to a supplied amount and type of the solid fuel, controlling a supplied amount and oxygen concentration of the first combustion gas based on the oxygen concentration and flow rate of the carrier gas and a first set amount of oxygen needed for combustion of the solid fuel, and controlling a supplied amount of the second combustion gas based on an amount of oxygen in the carrier gas, an amount of oxygen in the first combustion gas, and a second set amount of oxygen needed for combustion of the solid fuel.

In this case, at the start of combustion mode operation when the flue gas is deficient, the carrier gas is generated for operation by making up the flue gas deficiency by air, and when the flue gas increases, the flue gas is substituted for the air. Consequently, during a start-up operation when the oxygen concentration in the carrier gas is high, the first combustion gas is controlled as described above to keep down the oxygen concentration, allowing the oxygen concentration in the first combustion zone to be maintained in a range of reductive combustion.

With the oxygen-based combustion system, since the combustion gas is produced by diluting oxygen-rich gas with flue gas, the CO₂ concentration in the combustion gas reaches, for example, 60 to 90%, flame spread speed is drawn far low in comparison with the air, resulting a delay of an ignition. Thus, preferably the oxygen concentration in the carrier gas is set to 21% or below and the oxygen concentrations in the first and second combustion gases are controlled to be higher than that of air, for example, 25 to 35%.

### Advantageous Effects of Invention

The present invention makes it possible to achieve stable combustion in an oxygen-based combustion system.

### Brief Description of the Drawings

[Figure 1] Figure 1 is a block diagram of a boiler plant according to a first embodiment.
[Figure 2] Figure 2 is a sectional view of a burner in Figure 1.
[Figure 3] Figure 3 is a block diagram of a boiler plant according to a second embodiment.
[Figure 4] Figure 4 is a sectional view of a burner according to a third embodiment.
[Figure 5] Figure 5 is a sectional view of a burner according to a fourth embodiment.
[Figure 6] Figure 6 is a sectional view of a burner according to a fifth embodiment.
[Figure 7] Figure 7 is a sectional view of a burner according to a sixth embodiment.

### Description of Embodiments

The present invention will be described below based on embodiments.

### (First embodiment)

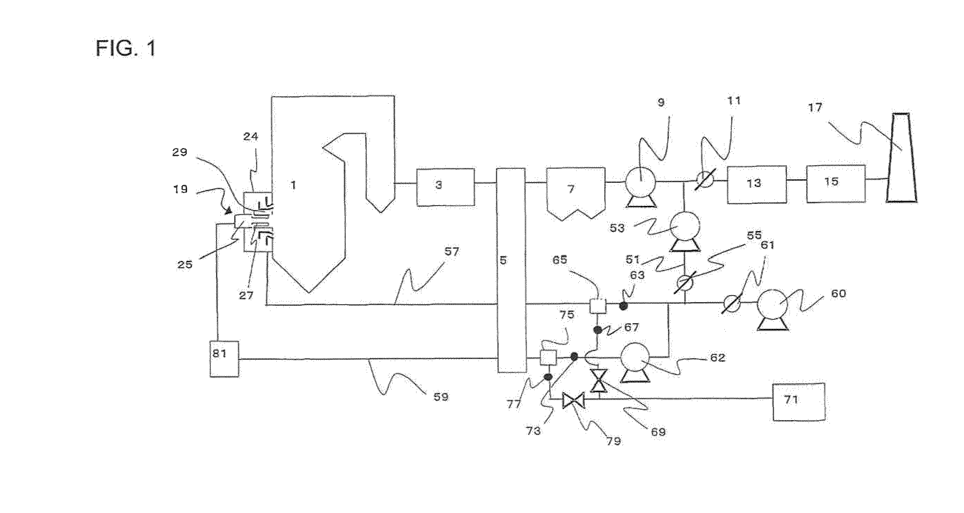

A first embodiment is an example in which combustion system according to the present invention is applied to a pulverized coal-burning boiler plant, the combustion system being configured to be switchable between an air combustion mode in which air is used as carrier gas for solid fuel, first combustion gas and second combustion gas, and an oxygen-based combustion mode in which mixed gas is used as the carrier gas, first combustion gas 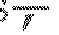 and second combustion gas, where the mixed gas is made by mixing oxygen-rich gas with flue gas produced when the solid fuel is burned. As shown in Figure 1, an oxygen-based combustion boiler 1 adapted to burn solid fuel such as pulverized coal with oxygen-rich combustion gas is installed in the boiler plant according to the first embodiment. The flue gas discharged from the boiler 1 is introduced into a denitrification device 3 adapted to remove nitrogen oxides from the flue gas. The denitrification device 3 includes an adding device adapted to add a reducing agent such as ammonia to the flue gas as well as a denitrification catalyst layer. The denitrification device 3 is designed to render the flue gas harmless by reducing nitrogen oxides in the flue gas to nitrogen. The flue gas discharged from the denitrification device 3 is cooled by a heat exchanger 5 and led to a dust collector 7 which is designed to collect and remove fly ashes from the flue gas. The flue gas discharged from the dust collector 7 is introduced into a desulfurizer 13 via an induced draft fan 9 and damper 11. The desulfurizer 13 is designed to remove sulfur oxides from the flue gas by bringing an absorbing solution such as a limestone slurry into contact with the flue gas. The flue gas discharged from the desulfurizer 13 is introduced into a CO₂ recovery device 15. The CO₂ recovery device 15 is designed to separate CO₂ from the flue gas and store the CO₂ in a CO₂ storage facility (not shown). A known device can be used as the CO₂ recovery device 15, where examples of the known device includes a device which separates and recovers CO₂ by compressing the flue gas and liquefying the CO₂ or a device which separates and recovers CO₂ by causing the CO₂ to be absorbed in an absorbing solution. Other flue gas components remaining after the CO₂ is separated by the CO₂ recovery device 15 are discharged to the atmosphere through a chimney 17.

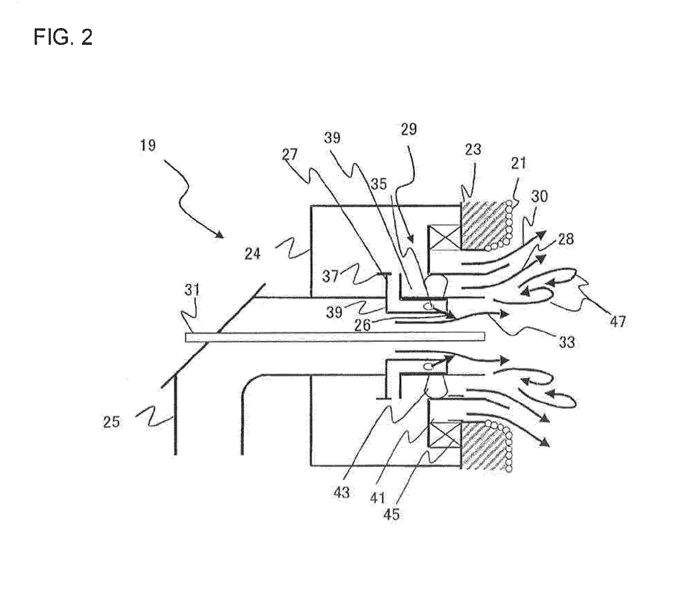

Next, a burner 19 installed in the boiler 1 according to the first embodiment will be described. As shown in Figure 2, the burner 19 is installed in a burner throat portion 23 on a side wall of the boiler 1, where the burner throat portion 23 is equipped with water-cooled tubes 21. The burner 19 includes a fuel nozzle 25 adapted to burn the pulverized coal supplied in accompaniment with carrier gas, first combustion gas nozzles 27 adapted to supply oxygen-rich first combustion gas (hereinafter referred to as additional combustion gas 26) into the fuel nozzle 25, and a second combustion gas nozzle 29 placed on an outer side of the fuel nozzle 25 and adapted to supply oxygen-rich secondary combustion gas 28 and tertiary combustion gas 30. A combustion-supporting oil gun 31 is installed on an axial center of the fuel nozzle 25. Plural through-holes are provided in a tube wall of the fuel nozzle 25 to allow insertion of the combustion gas nozzles 27. The combustion gas nozzles 27 are inserted in the respective through-holes. The combustion gas nozzles 27 are placed on an inner circumferential surface of the fuel nozzle 25, extending along an ejection direction of a pulverized-coal jet 33 sent by the carrier gas. A nozzle hole 35 adapted to eject the additional combustion gas 26 is formed in a tube wall of each combustion gas nozzle 27. The nozzle hole 35 is formed such that the additional combustion gas 26 will intersect substantially at right angles with the pulverized-coal jet 33. Also, the nozzle hole 35 is designed to supply the additional combustion gas 26 to a first combustion zone on a tip side of the fuel nozzle 25. A flow regulating valve 37 adapted to control flow rate of the additional combustion gas 26 is installed in the combustion gas nozzle 27.

The combustion gas nozzle 29 is formed by a double wall tube concentric with the fuel nozzle 25. The combustion gas nozzle 29 is designed to eject the secondary combustion gas 28 from an inner tube 39 and eject the tertiary combustion gas 30 from an outer tube 41 by branching the combustion gas supplied to a wind box 24 from a combustion gas line (described later). The inner tube 39 and outer tube 41 are expanded in diameter on the tip side. The inner tube 39 and outer tube 41 are provided with swirlers 43 and 45 adapted to impart swirling forces to the secondary combustion gas 28 and tertiary combustion gas 30, respectively. Consequently, the secondary combustion gas 28 and tertiary combustion gas 30 are ejected through the combustion gas nozzle 29 in a swirling motion while spreading radially outward. This produces a flow (hereinafter referred to as a circulating flow 47) opposite to the pulverized-coal jet 33, between the pulverized-coal jet 33 from the fuel nozzle 25 and swirling flows of the secondary combustion gas 28 and tertiary combustion gas 30. High-temperature gas produced by the combustion of fuel flows into the circulating flow 47 from downstream and stagnates there. The pulverized coal in the pulverized-coal jet 33 is mixed with the high-temperature gas at an outlet of the burner 19 and raised in temperature by radiant heat from the boiler 1, resulting in ignition.

Now, supply systems of carrier gas and combustion gas, which are a feature of the first embodiment, will be described. A branch line 51 is connected to the flue on an outlet side of the dust collector 7. An induced draft fan 53 and damper 55 are installed on the branch line 51 to allow a predetermined amount to be branched off from the flue gas from which fly ashes have been removed by the dust collector 7. The flue gas branched by the branch line 51 is further branched to a combustion gas line 57 and carrier gas line 59 and vented by a forced draft fan 60 and ventilator 62. A draft force of the forced draft fan 60 is designed to be adjusted by adjusting the opening of a damper 61 according to an amount of flue gas to be branched.

A flowmeter 63 adapted to measure flow rate of the flue gas and a mixing device 65 adapted to mix the flue gas and oxygen-rich gas are installed on the combustion gas line 57. The mixing device 65 is connected with an oxygen generator 71 via a pipe on which a flowmeter 67 and flow regulating valve 69 are installed. The oxygen generator 71 is, for example, a known oxygen generator based on a cryogenic separation process or the like and is designed to be able to separate oxygen from air, thereby generate oxygen-rich gas with an oxygen concentration of, for example, 90%, and supply the generated oxygen-rich gas to the mixing device 65. The combustion gas line 57 is connected to the wind box 24 of the burner 19 via the heat exchanger 5 and is designed to supply the wind box 24 with the combustion gas generated by mixing the flue gas and oxygen-rich gas and heated by the heat exchanger 5.

A flowmeter 73 adapted to measure the flow rate of the flue gas and a mixing device 75 adapted to mix the flue gas and oxygen-rich gas are installed on the carrier gas line 59. The mixing device 75 is connected with the oxygen generator 71 via a pipe on which a flowmeter 77 and flow regulating valve 79 are installed. The heat exchanger 5 and a crusher 81 are installed midway along a flow channel of the carrier gas line 59, where the crusher 81 is adapted to crush coal. The crusher 81 is supplied with the carrier gas generated by the mixing device 75 by mixing the flue gas and oxygen-rich gas and is designed to supply the fuel nozzle 25 with pulverized coal from the crusher 81 in accompaniment with the carrier gas. The carrier gas supplied to the crusher 81 is heated by the heat exchanger 5 through heat exchange with the flue gas and is designed to dry the pulverized coal in the crusher 81. Consequently, the carrier gas line 59 makes up a fuel supply device adapted to supply the pulverized coal to the boiler 1. The flow rate of the carrier gas supplied to the crusher 81 through the carrier gas line 59 is configured to be controllable by a controller (described later).

Characteristic operation of the first embodiment configured in this way will be described. The boiler plant according to the first embodiment is equipped with a controller (not shown) adapted to set oxygen concentration in the carrier gas and control flow rate of the carrier gas according to a supplied amount and type of pulverized coal, control a supplied amount and oxygen concentration of the additional combustion gas 26 based on the oxygen concentration and flow rate of the carrier gas and a first set amount of oxygen needed for combustion of the pulverized coal, and control the secondary combustion gas 28 and control a supplied amount of the secondary combustion gas based on an amount of oxygen in the carrier gas, an amount of oxygen in the additional combustion gas 26, and a second set amount of oxygen needed for combustion of the pulverized coal.

If, for example, the load of the boiler plant increases, increasing the supplied amount of pulverized coal, the flow rate of the carrier gas is increased by increasing the amount of the flue gas running through the carrier gas line 59. The oxygen concentration in the carrier gas is set to such a level that the coal will not ignite spontaneously during transport, based on the type of coal including, for example, the coal rank of the coal and difference in amount of volatile matter. On the other hand, the flue gas contains oxygen remaining after combustion of the pulverized coal, and thus the oxygen concentration in the flue gas is determined based on operational status and the like of the plant. Then, a difference between a set oxygen concentration of the carrier gas and oxygen concentration in the flue gas is determined, and oxygen-rich gas is mixed in the flue gas so as to eliminate the difference, thereby generating the carrier gas. That is, the necessary amount of oxygen-rich gas is determined based on the flow rate of the flue gas measured by the flowmeter 73 and the opening of the flow regulating valve 79 is adjusted such that the necessary amount of oxygen-rich gas will be supplied to the mixing device 75, based on the flow rate of oxygen-rich gas measured by the flowmeter 77. Consequently, the amount of oxygen-rich gas supplied to the mixing device 75 is adjusted and the oxygen concentration in the carrier gas is controlled to match the set oxygen concentration.

On the other hand, the amount of oxygen to be supplied to the first combustion zone is determined from the flow rate and oxygen concentration of the carrier gas, a difference between the determined amount of oxygen and the set amount of oxygen which will enable reductive combustion (low-NOx combustion) in the first combustion zone is determined, and the oxygen concentration and supplied amount of the additional combustion gas 26 is controlled such that the amount of oxygen corresponding to the difference will be supplied to the first combustion zone. That is, the necessary amount of oxygen-rich gas is determined based on the flow rate of the flue gas measured by the flowmeter 63 and the opening of the flow regulating valve 69 is adjusted such that the necessary amount of oxygen-rich gas will be supplied to the mixing device 65, based on the flow rate of oxygen-rich gas measured by the flowmeter 67. Consequently, the amount of oxygen-rich gas supplied to the mixing device 65 is adjusted and the oxygen concentration in the additional combustion gas 26 is adjusted. Also, the supplied amount of the additional combustion gas 26 is controlled by adjusting the opening of the flow regulating valve 37 in the combustion gas nozzle 27.

Now, coordinated control between the oxygen concentration and flow rate of the carrier gas and the oxygen concentration and flow rate of the additional combustion gas 26 will be illustrated by example. When an excess oxygen ratio of the boiler 1 is varied from 10 to 40% under steady-state load, the oxygen concentration in the flue gas discharged from the boiler 1 varies from 2 to 8%. Therefore, once the excess oxygen ratio of the boiler 1 is determined, the oxygen concentration in the flue gas is determined on its own. Regarding the oxygen-rich gas, although its purity varies with the manufacturing process of oxygen gas, the concentration will seldom change during operation. For example, when the boiler 1 is operated at an excess oxygen ratio of 20%, the oxygen concentration in the flue gas discharged from the boiler 1 will be 5%. If the oxygen concentration of the oxygen-rich gas generated by the oxygen generator 71 is 90%, in order to provide an oxygen concentration of 10% in the carrier gas line 59, a ratio between the flow rate of the flue gas measured by the flowmeter 73 and the flow rate of oxygen-rich gas measured by the flowmeter 77 can be controlled to be equal to 16:1.

Incidentally, an amount of oxygen found by adding an excess amount to a theoretical amount of oxygen needed for combustion of the pulverized coal has been set in advance, and a difference between the set amount of oxygen and the amount of oxygen supplied by the carrier gas and additional combustion gas 26 is determined. Then, the oxygen concentrations and supplied amounts of the secondary combustion gas 28 and tertiary combustion gas 30 is controlled so as to eliminate the difference, forming an oxidizing flame around the reducing flame generated in the first combustion zone and thereby enabling stable combustion of the pulverized coal.

Consequently, even if the oxygen concentration in the carrier gas is set low to prevent spontaneous ignition of the solid fuel during transport, the oxygen deficiency is made up by the additional combustion gas 26. This makes it possible to increase the oxygen concentration in the first combustion zone on an outlet side of the fuel nozzle 25 and thereby improve ignition performance. Accordingly, an amount of oxygen in the first combustion zone in the fuel nozzle 25 is set at a level necessary to maintain the reducing flame. Then,
the amount of oxygen needed to burn an unburnt portion is determined from the difference between the amount of oxygen found by adding the excess amount to the theoretical amount of oxygen needed for combustion of the pulverized coal and the amount of oxygen supplied by the carrier gas and additional combustion gas 26. Since the required amount of oxygen thus determined can be supplemented by the secondary combustion gas 28 and tertiary combustion gas 30, the pulverized coal can be burned stably.

Also, by performing control so as to equalize the oxygen concentration of the additional combustion gas 26 with the oxygen concentration of the secondary combustion gas 28 and tertiary combustion gas 30, the first embodiment can simplify the apparatus and operation. For example, if diameter of the burner 19 is not large, control can be performed so as to equalize the oxygen concentration of the additional combustion gas 26 with the oxygen concentration of the secondary combustion gas 28 and tertiary combustion gas 30. This makes it possible to control the flow rate of the additional combustion gas 26 and the flow rates of the secondary combustion gas 28 and tertiary combustion gas 30 using the flow regulating valve 37 and thereby supply the necessary amount of oxygen in each of the combustion gases. Incidentally, if the diameter of the burner 19 is large, separate gas lines can be installed so that the oxygen concentration of the additional combustion gas 26 and the oxygen concentration of the secondary combustion gas 28 and tertiary combustion gas 30 can be controlled separately.

Also, according to the first embodiment, the combustion gas supplied from the combustion gas line 57 to the wind box 24 is divided into the additional combustion gas 26 and the secondary combustion gas 28 and tertiary combustion gas 30 using the flow regulating valve 37. However, separate gas lines may be installed to control the flow rate of the additional combustion gas 26 and the flow rate of the secondary combustion gas 28 and tertiary combustion gas 30 independently.

Also, during a start-up operation, a plant with a combustion system such as the one according to the first embodiment will run short of flue gas, and thus operate in the air combustion mode in which air is used as combustion gas for pulverized coal. Then, with increases in the flue gas, the plant is switched to the oxygen-based combustion mode in which mixture of the flue gas and oxygen-rich gas is used as the combustion gas. In so doing, when the flue gas increases during the start-up operation, the flue gas is substituted for the air. In this case, while the oxygen concentration in the carrier gas is high due to the admixture of air, control is performed so as to keep down the amount of oxygen-rich gas supplied to the carrier gas and set the flow rate or oxygen concentration of the additional combustion gas 26 to a low level. In this way, plant is operated by switching between the air combustion mode and oxygen-based combustion mode.

Also, under high load at which the flow rate of the carrier gas is high, flames tend to leap up, and thus control is performed so as not to decrease the oxygen concentration in the carrier gas too much.

Incidentally, with the oxygen-based combustion system, since the combustion gas is produced by diluting oxygen-rich gas with flue gas, the CO₂ concentration in the combustion gas reaches, for example, 60 to 90%, flame spread speed is drawn far low in comparison with the air, resulting a delay of an ignition. Also, an amount of heat absorption in a furnace of the boiler 1 can get lower than with an air combustion method. Thus, preferably the oxygen concentration in the carrier gas is set to 21% or below and the oxygen concentration of the additional combustion gas 26 as well as the oxygen concentration of the secondary combustion gas 28 and tertiary combustion gas 30 are controlled to be, for example, 25 to 35%. That is, preferably the oxygen concentration in the combustion zone is controlled to be higher than during air combustion. Incidentally, if the oxygen concentration is increased too much, for example, if the oxygen concentration exceeds 50%, components might be damaged by ignition/explosion of the fuel upstream of the burner 19 or abnormally high temperature of the burner 19. Therefore, preferably the oxygen concentration is controlled so as not to exceed 35%. Incidentally, a lower limit of the oxygen concentration in the carrier gas can be set appropriately according to the type of coal. For example, depending on burner structure and gas flow velocity, bituminous coal has low flame stability when the oxygen concentration is less than 10% and becomes difficult to ignite when the oxygen concentration falls to about 5%.

The flue gas can be branched by connecting the branch line 51 to the flue on an outlet side of the desulfurizer 13 rather than on the outlet side of the dust collector 7. That is, preferably the carrier gas and combustion gas are generated using flue gas from which at least fly ashes have been removed.

Also, to measure the oxygen concentrations in the combustion gas line 57 and the carrier gas line 59, an analyzer adapted to analyze oxygen concentrations in piping may be installed in addition to determination by means of flowmeters. In that case, since usual analyzers take measurements on a dry basis, it is desirable to make evaluations on a wet basis by installing a moisture meter jointly. Desirably the analyzer is installed downstream of the heat exchanger 5. The oxygen concentration of the additional combustion gas 26 as well as the oxygen concentration of the secondary combustion gas 28 and tertiary combustion gas 30 can be measured by installing an oxygen concentration meter in the wind box 24. Desirably the oxygen concentration in the carrier gas is measured in the fuel nozzle 25, but since it is conceivable that an analyte-gas sampling hole may be clogged with fuel, the oxygen concentration may be measured between the heat exchanger 5 and crusher 81 when a purge function is not provided.

Also, when a combustion system such as described above is constructed by remodeling an existing air combustion boiler plant and/or adding facilities to the existing air combustion boiler plant, it is desirable to avoid major remodeling of the heat exchanger and so on in the boiler 1 from the economic standpoint.

### (Second embodiment)

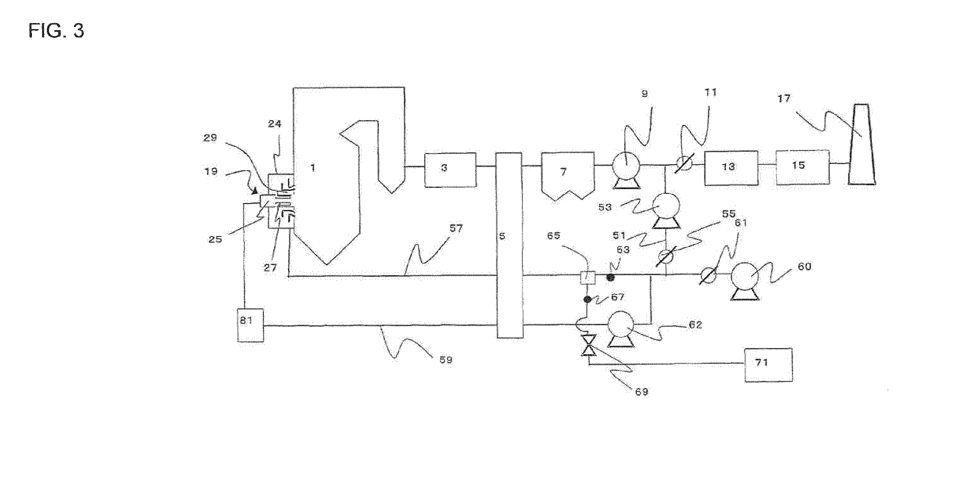

A block diagram of a boiler plant according to a second embodiment is shown in Figure 3. The second embodiment differs from the first embodiment in that the flue gas is used directly as carrier gas. That is, the mixing device 75 and flowmeter 73 on the carrier gas line 59 as well as the flowmeter 77 and flow regulating valve 79 for oxygen-rich gas are omitted, and the flue gas is used as carrier gas without being mixed with oxygen-rich gas. Other components are the same as the first embodiment, and thus denoted by the same reference numerals as the corresponding components in the first embodiment and description thereof will be omitted.

For example, even if the carrier gas supplied to the fuel nozzle 25 has a low oxygen concentration, coal with good combustion characteristics, such as lignite, can achieve stable ignition as long as the additional combustion gas 26 has a high oxygen concentration. Also, when coal with good combustion characteristics is used, it is advisable not to mix oxygen because the fuel might ignite spontaneously or explode in some midpoint in piping if oxygen is mixed in the carrier gas line 59. Thus, according to the second embodiment, the flue gas is used directly as carrier gas without adding oxygen-rich gas to the flue gas. In this case, the oxygen concentration in the flue gas on the outlet side of the boiler 1 determined based on the operational status and the like of the plant is used as the oxygen concentration in the carrier gas. This makes it possible to omit control over the oxygen concentration in the carrier gas and thereby reduce facility and operating costs.

### (Third embodiment)

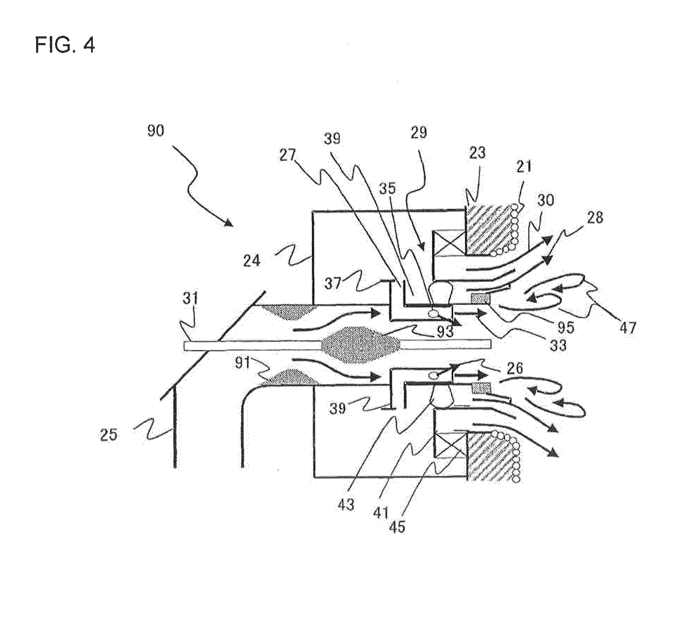

A burner suitable for the boiler plant according to the first or second embodiment is shown in Figure 4 as a third embodiment. As shown in Figure 4, a burner 90 according to the third embodiment differs from the burner 19 according to the first embodiment in that a venturi 91 shaped to smoothly contract and expand a sectional area of the flow channel from an outer peripheral side is formed on the upstream side of the fuel nozzle 25, that a concentrator 93 shaped to smoothly contract and expand a sectional area of the flow channel of the fuel nozzle 25 from inside is installed on the downstream side of the venturi 91, and that the additional combustion gas 26 is supplied to the downstream side of the concentrator 93. Furthermore, a barrier called a flame holder 95 is installed on an exterior side of a tip portion of the fuel nozzle 25, i.e., on an outlet side of the furnace of the boiler 1. Other components are the same as the first embodiment, and thus denoted by the same reference numerals as the corresponding components in the first embodiment and description thereof will be omitted.

The flame holder 95 acts as a barrier to the pulverized-coal jet 33 and flow of secondary combustion gas 28 ejected from the fuel nozzle 25. Therefore, since the pressure on the downstream side of the flame holder 95 can be reduced, the circulating flow 47 grows large. Consequently, high-temperature gas flows in from the furnace of the boiler 1 more intensely than in the first embodiment. On the other hand, the pulverized coal is condensed on an outer peripheral side of the fuel nozzle 25 by the venturi 91 and concentrator 93. This improves mixability with the additional combustion gas 26 supplied to the outer peripheral side of the fuel nozzle 25. Consequently, the pulverized coal is condensed and the pulverized-coal jet 33 with a high oxygen concentration is produced near the flame holder 95 and flows into the circulating flow 47, making the ignition of pulverized coal faster than in the first embodiment. This allows the oxygen concentration in the carrier gas line to be made lower than in the first embodiment.

### (Fourth embodiment)

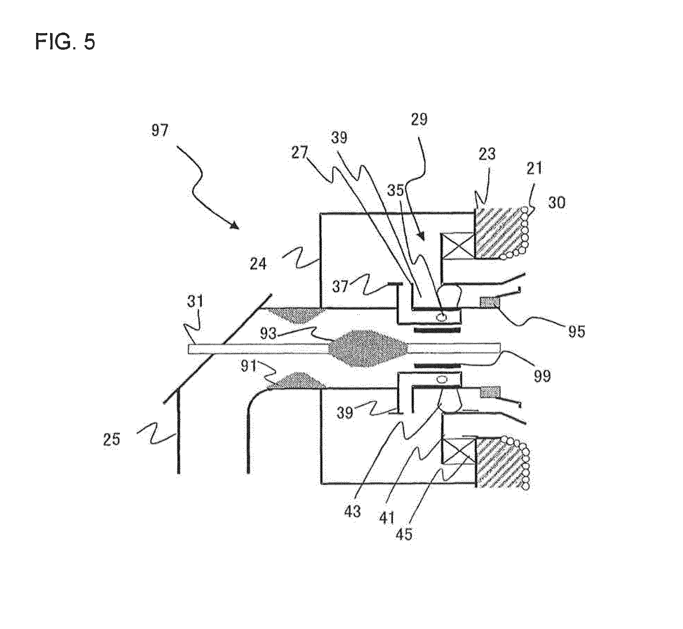

A burner suitable for the boiler plant according to the first or second embodiment is shown in Figure 5 as a fourth embodiment. A burner 97 according to the fourth embodiment differs from the burner 90 according to the third embodiment in that a distributor 99 is placed to partition the flow channel in the fuel nozzle 25 on the downstream side of the concentrator 93. Other components are the same as the third embodiment, and thus denoted by the same reference numerals as the corresponding components in the third embodiment and description thereof will be omitted.

The distributor 99 is a ring-shaped member formed along an axial direction of the fuel nozzle 25 and is placed concentrically with the fuel nozzle 25. When viewed in a direction perpendicular to an axis of the burner 97, the nozzle holes 35 of the combustion gas nozzles 27 are formed at locations overlapping the distributor 99. The partitioning of the flow channel by the distributor 99 keeps the pulverized coal, carrier gas, and additional combustion gas 26 from mixing with one another. This makes it possible to prevent dispersion of the pulverized coal due to collisions among pulverized coal particles as well as diffusion of the additional combustion gas 26 to near a central axis. Consequently, gas with a low oxygen concentration and gas with a high oxygen concentration can be separated at an outlet of the burner 97 with the former directed onto the central axis and the latter directed toward an outer circumference. This increases the oxygen concentration in the carrier gas around the pulverized coal near the flame holder 95, enabling stable ignition. Incidentally, with the fourth embodiment, the combination of the concentrator 93 and distributor 99 allows the pulverized coal to be physically gathered in a circumferential direction of the fuel nozzle 25. Also, the additional combustion gas 26 with a high oxygen concentration ejected from the combustion gas nozzles 27 is thrown in the circumferential direction of the fuel nozzle 25, passing between the distributor 99 and an inner wall of the fuel nozzle 25. This makes it possible to facilitate mixing of the additional combustion gas 26 and pulverized coal, making the ignition of pulverized coal near the flame holder 95 faster than with the burner 90 according to the third embodiment and reducing the oxygen concentration in the carrier gas.

### (Fifth embodiment)

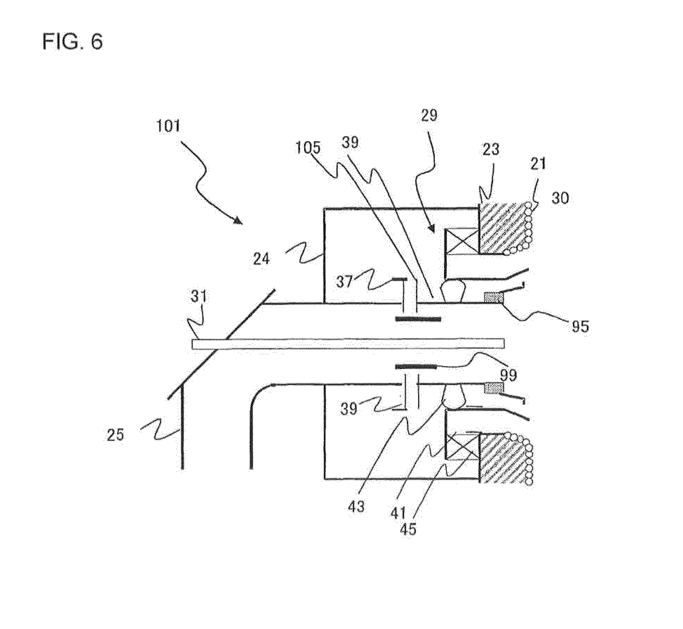

A burner suitable for the boiler plant according to the first or second embodiment is shown in Figure 6 as a fifth embodiment. A burner 101 according to the fifth embodiment differs from the burner 97 according to the fourth embodiment in that combustion gas nozzles 105 are formed such that the additional combustion gas 26 will be ejected vertically to the pulverized-coal jet 33 from the circumferential direction of the fuel nozzle 25 and that the venturi 91 and concentrator 93 are omitted. Other components are the same as the fourth embodiment, and thus denoted by the same reference numerals as the corresponding components in the fourth embodiment and description thereof will be omitted.

Plural combustion gas nozzles 105 adapted to eject the additional combustion gas 26 onto the central axis of the burner are placed on an external wall of the fuel nozzle 25. The additional combustion gas 26 ejected substantially vertically to the pulverized-coal jet 33 collides with the distributor 99 and thereby forms a high oxygen concentration zone in outer peripheral part of the fuel nozzle 25 without spreading toward a center of the burner 101. This makes it possible to achieve stable ignition at the burner outlet.

### (Sixth embodiment)

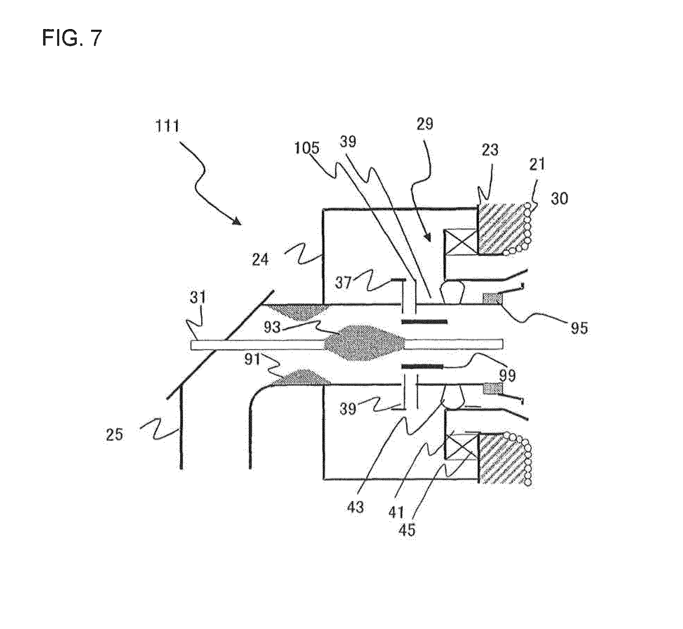

A burner suitable for the boiler plant according to the first or second embodiment is shown in Figure 7 as a sixth embodiment. A burner 111 according to the sixth embodiment differs from the burner 101 according to the fifth embodiment in that the venturi 91 and concentrator 93 are installed upstream of the distributor 99. Regarding other components, the other components are the same as the fifth embodiment, and thus denoted by the same reference numerals as the corresponding components in the fifth embodiment and description thereof will be omitted.

This makes it possible to condense pulverized coal in an outer circumferential direction of the fuel nozzle 25 and form a zone with a high oxygen concentration using the concentrator 93 and distributor 99. Also, the flame holder 95 forms a large backflow zone, causing high-temperature gas to flow in from the furnace and thereby facilitating ignition and combustion of pulverized coal near the flame holder 95 on the outer circumference of the fuel nozzle 25 at the burner outlet.

### Example

Now, experimental results on stability evaluations of flames produced by the burners according to the first to sixth embodiments described above will be described as an example. The oxygen-based combustion system, in which combustion gas has a high carbon dioxide concentration as described above, is poorer in flame spread than air combustion. Consequently, if the oxygen-based combustion system is configured to adjust the oxygen concentration in the carrier gas to be lower than the oxygen concentration (21%) in air to prevent spontaneous ignition of pulverized coal, the flame stability is compromised. Thus, in the first to sixth embodiments, combustion gas nozzles are provided to supply additional combustion gas to the burners. Experimental results which evaluate consequent flame stability on the burners are shown in Table 1. Incidentally, a burner not provided with a combustion gas nozzle and not supplied with additional combustion gas is shown in Table 1 as a comparative example.

**[Table 1]**

| Oxygen Concentration in Carrier Gas | 24% | | | 21% | | | 15% | | | 10% | | | 5% | | |
|---|---|---|---|---|---|---|---|---|---|---|---|---|---|---|---|
| Coal Type | A | B | C | A | B | C | A | B | C | A | B | C | A | B | C |
| First Embodiment | ○ | ○ | ○ | ○ | ○ | ○ | ○ | ○ | ○ | × | Δ | ○ | × | × | Δ |
| Second Embodiment | - | - | - | - | - | - | - | - | - | - | - | - | × | × | Δ |
| Third Embodiment | ○ | ○ | ○ | ○ | ○ | ○ | ○ | ○ | ○ | × | ○ | ○ | × | × | Δ |
| Fourth Embodiment | ○ | ○ | ○ | ○ | ○ | ○ | ○ | ○ | ○ | ○ | ○ | ○ | × | Δ | ○ |
| Fifth Embodiment | ○ | ○ | ○ | ○ | ○ | ○ | ○ | ○ | ○ | × | × | ○ | × | × | Δ |
| Sixth Embodiment | ○ | ○ | ○ | ○ | ○ | ○ | ○ | ○ | ○ | ○ | ○ | ○ | × | × | Δ |
| Burner of Comparative Example | ○ | ○ | ○ | × | ○ | ○ | × | × | ○ | × | × | × | × | × | × |

In the present experiment, the average oxygen concentration of all the gases supplied through the entire burner--i.e., the carrier gas, additional combustion gas 26, secondary combustion gas 28, and tertiary combustion gas 30 taken together--was 27%. Flame stability was visually evaluated at oxygen concentrations of 24%, 21%, 15%, 10%, and 5% in the carrier gas. Specifically, images of high-temperature flames were visually checked, and a rating of stable ○ was given when a flame was formed by the entire area of the burner base (furnace-side opening portion (aperture) of the burner), a rating of unstable × was given when white portion of the flame existed only in part of the burner base, and a rating of medium Δ of stable and unstable was given when the flame condition was somewhere in between. Also, the flame stability of multiple different coal types (A: bituminous coal; B: subbituminous coal; and C: lignite) was evaluated. Regarding the second embodiment, in which the carrier gas was made up only of flue gas without admixture of oxygen-rich gas, the flame stability was evaluated only at an oxygen concentration of 5%, which was the oxygen concentration in the flue gas.

As shown in Table 1, with the burner according to the comparative example, all the coal types produced stable flames when the oxygen concentration in the carrier gas was 24%, which is higher than the oxygen concentration in air. However, when the oxygen concentration was lowered to 21%, equivalent to that in air, bituminous coal produced an unstable flame. Then, as the oxygen concentration was lowered to 10%, all the coal types produced unstable flames.

In contrast, with the burners according to the first and third to sixth embodiments, all the coal types produced stable flames at oxygen concentrations from 24% which is higher than in air to 15% which is lower than in air. At an oxygen concentration of 10%, combinations of some burners and some coal types produced unstable flames, but lignite produced stable flames with all the burners. Furthermore, as the oxygen concentration was lowered, the flames became unstable, making ignition difficult in a growing number of cases. However, when lignite was burned by the burner according to the fourth embodiment, the flame was stable even at an oxygen concentration of 5%.

For example, the burner according to the fourth embodiment enabled stable combustion without causing the flame to leap up from the burner base (to separate from the aperture) when the oxygen concentration in the carrier gas was 21% which was approximately equivalent to that in air, and even 10% which was less than half that in air. On the other hand, with the burner according to the comparative example, when the oxygen concentration in the carrier gas was 21% which was approximately equivalent to that in air, the flame was unstable, leaping up from the burner base (separating widely from the aperture). Incidentally, preferably the oxygen concentration in the carrier gas is adjusted to be lower than the oxygen concentration (approximately 21%) in air to prevent spontaneous ignition of pulverized coal, and preferably the additional combustion gas is adjusted to be equal to or higher in oxygen concentration than air.

In this way, the lower limit of oxygen concentration in the carrier gas for a stable flame varies with the conditions, including the coal type, which affect combustion characteristics but the burners according to the first and third to sixth embodiments, when used by supplying the additional combustion gas, can stabilize the flames on the burners. That is, even if the oxygen concentration in the carrier gas is lower than the oxygen concentration (approximately 21%) in air, a stable flame can be produced, making it possible to prevent spontaneous ignition of pulverized coal reliably by decreasing the oxygen concentration in the carrier gas. In other words, by adjusting the oxygen concentration in the carrier gas to be lower than the average oxygen concentration of the carrier gas, additional combustion gas, secondary combustion gas, and tertiary combustion gas taken together and by adjusting the oxygen concentration in additional combustion gas to be higher than the average oxygen concentration of the carrier gas, additional combustion gas, secondary combustion gas, and tertiary combustion gas taken together, it is possible to implement a combustion system which can produce a stable flame.

### Reference Signs List

- 1: Boiler
- 7: Dust collector
- 15: CO₂ recovery device
- 19: Burner
- 25: Fuel nozzle
- 26: Additional combustion gas
- 27: Combustion gas nozzle
- 28: Secondary combustion gas
- 29: Combustion gas nozzle
- 30: Tertiary combustion gas
- 57: Combustion gas line
- 59: Carrier gas line

## Claims

1. A combustion system wherein:
a burner adapted to burn solid fuel comprises a fuel nozzle adapted to burn solid fuel supplied in accompaniment with carrier gas, a first combustion gas nozzle adapted to supply first combustion gas into the fuel nozzle, a second combustion gas nozzle placed on an outer side of the fuel nozzle and adapted to supply second combustion gas;
the combustion system is configured to be switchable between an air combustion mode in which air is used as the carrier gas, the first combustion gas and the second combustion gas, and an oxygen-based combustion mode in which mixed gas is used as the carrier gas, the first combustion gas and the second combustion gas, where the mixed gas is made by mixing oxygen-rich gas with flue gas produced when the solid fuel is burned;
respective oxygen concentrations and supplied amounts of the carrier gas, the first combustion gas, and the second combustion gas are each configured to be adjustable; and
in the oxygen-based combustion mode, the oxygen concentration in the carrier gas is adjusted to be lower than an average oxygen concentration cf the carrier gas, the first combustion gas and the second combustion gas taken together, and
the oxygen concentration in the first combustion gas is adjusted to be equal to or higher than the average oxygen concentration of the carrier gas, the first combustion gas and the second combustion gas taken together.

2. The combustion system according to claim 1, wherein:
the fuel nozzle includes a distributor adapted to divide a flow channel in the fuel nozzle; and
an outlet of the first combustion gas nozzle is formed at a location overlapping the distributor when viewed in a direction perpendicular to a burner axis.

3. The combustion system according to claim 1 or 2, wherein:
the fuel nozzle includes a venturi and a concentrator located in a flow channel upstream of a position at which the first combustion gas nozzle is connected, the venturi being adapted to smoothly contract and expand a sectional area of the flow channel of the fuel nozzle from an outer peripheral side while the concentrator being adapted to smoothly expand the sectional area of the flow channel downstream of the venturi from inside; and
a flame holder is installed at a tip of a partition wall partitioning the fuel nozzle and the second combustion gas nozzle, the flame holder being adapted to block flow of the solid fuel and carrier gas ejected through the fuel nozzle and flow of the first combustion gas ejected through the first combustion gas nozzle.

4. A combustion system comprising:
an oxygen-based combustion boiler adapted to burn solid fuel by diluting oxygen-rich gas with flue gas;
a crusher adapted to crush the solid fuel;
a fuel supply device adapted to supply the crushed solid fuel to a burner of the boiler in accompaniment with carrier gas;
a dust collector adapted to collect fly ashes in flue gas discharged from the boiler; and
a carbon dioxide recovery unit adapted to separate and recover carbon dioxide from the flue gas discharged from the dust collector;
the burner in turn comprising a fuel nozzle adapted to burn the solid fuel supplied in accompaniment with the carrier gas, a first combustion gas nozzle adapted to supply first combustion gas into the fuel nozzle, and a second combustion gas nozzle placed on an outer side of the fuel nozzle and adapted to supply second combustion gas,
wherein the combustion system further comprises a carrier gas line adapted to generate the carrier gas from the flue gas branching off from a downstream side of the dust collector,
a combustion gas line adapted to generate combustion gas by adding oxygen-rich gas to the flue gas branching off from the downstream side of the dust collector, and
a controller adapted to set oxygen concentration in the carrier gas and control flow rate of the carrier gas according to a supplied amount and type of the solid fuel, control a supplied amount and oxygen concentration of the first combustion gas based on the oxygen concentration and flow rate of the carrier gas and a set amount of oxygen needed for combustion of the solid fuel, and control a supplied amount of the second combustion gas based on an amount of oxygen in the carrier gas, an amount of oxygen in the first combustion gas, and a second set amount of oxygen needed for combustion of the solid fuel.

5. The combustion system according to claim 4, wherein an adding device adapted to add oxygen-rich gas to the flue gas based on the oxygen concentration in the carrier gas set by the controller is installed on the carrier gas line.

6. The combustion system according to claim 4 or 5,
wherein
the controller sets the oxygen concentration in the carrier gas to 21% or below and controls the oxygen concentrations in the first and second combustion gases to be 25 to 35%.

7. A combustion system wherein:
a burner adapted to burn solid fuel comprises a fuel nozzle adapted to burn solid fuel supplied in accompaniment with carrier gas, a first combustion gas nozzle adapted to supply first combustion gas into the fuel nozzle, a second combustion gas nozzle placed on an outer side of the fuel nozzle and adapted to supply second combustion gas;
the combustion system is corifigured to be switchable between an air combustion mode in which air is used as the carrier gas, the first combustion gas, and the second combustion gas and an oxygen-based combustion mode in which the fuel gas produced by combustion of the solid fuel is used as the carrier gas while mixed gas is used as the first combustion gas, and the second combustion gas, where the mixed gas is made by mixing oxygen-rich gas with flue gas produced when the solid fuel is burned;
and
in the oxygen-based combustion mode, the oxygen concentration in the carrier gas is set to be lower than an average oxygen concentration of the carrier gas, the first combustion gas, and the second combustion gas taken together and
the oxygen concentration in the first combustion gas is adjusted to be equal to or higher than the average oxygen concentration of the carrier gas, the first combustion gas, and the second combustion gas taken together.

8. An operating method for a combustion system which comprises an oxygen-based combustion boiler adapted to burn solid fuel by diluting oxygen-rich gas with flue gas, a crusher adapted to crush the solid fuel, a fuel supply device adapted to supply the crushed solid fuel to a burner of the boiler in accompaniment with carrier gas, a dust collector adapted to collect fly ashes in flue gas discharged from the boiler, and a carbon dioxide recovery unit adapted to separate and recover carbon dioxide from the flue gas discharged from the dust collector,
the burner in turn comprising a fuel nozzle adapted to burn the solid fuel supplied in accompaniment with the carrier gas, a first combustion gas nozzle adapted to supply first combustion gas into the fuel nozzle, and a second combustion gas nozzle placed on an outer side of the fuel nozzle and adapted to supply second combustion gas, the operating method comprising:
generating the carrier gas by selectively adding oxygen-rich gas to the flue gas branching off from the downstream side of the dust collector;
generating the first combustion gas and the second combustion gas by adding oxygen-rich gas to the flue gas branching off from the downstream side of the dust collector; and
setting oxygen concentration in the carrier gas and controlling flow rate of the carrier gas according to a supplied amount and type of the solid fuel, controlling a supplied amount and oxygen concentration of the first combustion gas based on the oxygen concentration and flow rate of the carrier gas and a first set amount of oxygen needed for combustion of the solid fuel, and controlling a supplied amount of the second combustion gas based on an amount of oxygen in the carrier gas, an amount of oxygen in the first combustion gas, and a second set amount of oxygen needed for combustion of the solid fuel.

9. The operating method for a combustion system according to claim 8, wherein
during a start-up operation, the carrier gas is generated by making up deficiency of the flue gas branching off from the downstream side of the dust collector, using air.

10. The operating method for a combustion system according to claim 8 or 9, wherein
the oxygen concentration in the carrier gas is set to 21% or below and the oxygen concentrations in the first and second combustion gases are controlled to be 25 to 35%.
